# EUROPÄISCHE PATENTSCHRIFT

(11) **EP 0 763 724 B1**
(45) Veröffentlichungstag und Bekanntmachung des Hinweises auf die Patenterteilung: **03.05.2000**
(21) Anmeldenummer: 96114561.2
(22) Anmeldetag: 11.09.1996
(51) Int. Cl.: G01L 1/24

(54) **Faseroptischer Belastungssensor**
Fibre optic load sensor
Capteur de charge à fibre optique

(30) Priorität: 15.09.1995 DE 19534260
(43) Veröffentlichungstag der Anmeldung: 19.03.1997
(73) Patentinhaber: Motzko, Friedrich, 86529 Schrobenhausen (DE)
(72) Erfinder: Motzko, Friedrich, 86529 Schrobenhausen (DE); Plamper, Jörg, 86529 Schrobenhausen (DE)
(74) Vertreter: Haft, von Puttkamer, Berngruber, Czybulka

(56) Entgegenhaltungen:
- DE-A- 4 304 545
- GB-A- 1 570 511
- GB-A- 2 125 572
- GB-A- 2 127 172
- US-A- 4 788 868
- MEASUREMENT SCIENCE AND TECHNOLOGY, Bd. 3, Nr. 4, April 1992, BRISTOL GB, Seiten 375-380, XP000290905 Y. OHTSUKA U.A.: "POLARIMETRIC FIBRE COIL DEFORMATION SENSOR INSENSITIVE TO AMBIENT TEMPERATURE DISTURBANCES"
- JOURNAL OF LIGHTWAVE TECHNOLOGY, Bd. 7, Nr. 3, März 1989, NEW YORK US, Seiten 525-529, XP000068592 T. ABE U.A.: "A STRAIN SENSOR USING TWISTED OPTICAL FIBERS"
- MEASUREMENT AND CONTROL, Bd. 26, Nr. 2, März 1993, LONDON GB, Seiten 45-47, XP000361935 J. BOBY U.A.: "VEHICLE WEIGHING IN MOTION WITH FIBRE OPTIC SENSORS"

## Beschreibung

Die Erfindung betrifft einen faseroptischen Belastungssensor mit einer Stützstruktur und mindestens einer Störstruktur, auf welcher mindestens eine Lichtleitfaser aufliegt.

Ein derartiger Belastungssensor ist beispielsweise aus der DE 33 25 945 A1 bekannt und basiert prinzipiell darauf, daß seitlich auf die Lichtleitfaser wirkende Kräfte zu Verformungen des entsprechenden Faserabschnittes führen. Bei der bekannten Anordnung liegt die Lichtleitfaser auf einer periodischen geformten Stützstruktur auf, so daß es bei einer Belastung senkrecht zur Faserachse zu einer periodischen Verformung kommt. Wenn letztere im richtigen Verhältnis zur Schwebungslänge zweier in der Lichtleitfaser geführter Moden steht, so bewirken Druckänderungen entsprechende Änderungen in der Modenkopplung. Die bekannte Anordnung ist also stark von der Geometrie der Stützstruktur und letztlich von deren Ausdehnungskoeffizient bei Temperaturänderungen abhängig. Auch Zugbelastungen, beispielsweise beim Verlegen eines derartigen Sensors in eine Fahrbahndecke, wirken sich dauerhaft störend aus.

Es ist daher Aufgabe der vorliegenden Erfindung, einen faseroptischen Belastungssensor zu schaffen, welcher insbesondere zur Detektion von Fahrzeugen in der Fahrbahndecke verlegbar ist, den dabei auftretenden mechanischen und thermischen Belastungen gut standhält und mit möglichst geringer Fehlerrate das Überfahren eines Fahrzeugrades detektiert.

Diese Aufgabe wird durch einen nach Patentanspruch 1 augebildeten Belastungssensor gelöst.

Während bekannte Belastungssensoren im allgemeinen die Verbiegung von Lichtleitfasern aus einem im wesentlichen unverformten Zustand detektieren, liegen bei dem erfindungsgemäßen Belastungssensor bereits im unbelasteten Zustand eine Vielzahl von Verformungen pro Längeneinheit vor, wobei eine zusätzliche Druckbelastung Änderungen der jeweiligen Biegeradien verursacht, welche wiederum Veränderungen der Dämpfung der Lichtleitfaser bewirken.

Die Erfindung wird im folgenden anhand einer schematischen, das Funktionsprinzip beschreibenden Darstellung sowie zweier Ausführungsbeispiele näher beschrieben. Es zeigen:
- Fig. 1: den schematischen Aufbau eines faseroptischen Belastungssensors,
- Fig. 2 und 3: zwei Ausführungen von seilförmigen Belastungssensoren und
- Fig. 4: einen Schnitt durch eine Fahrbahndecke mit darin verlegtem Belastungssensor.

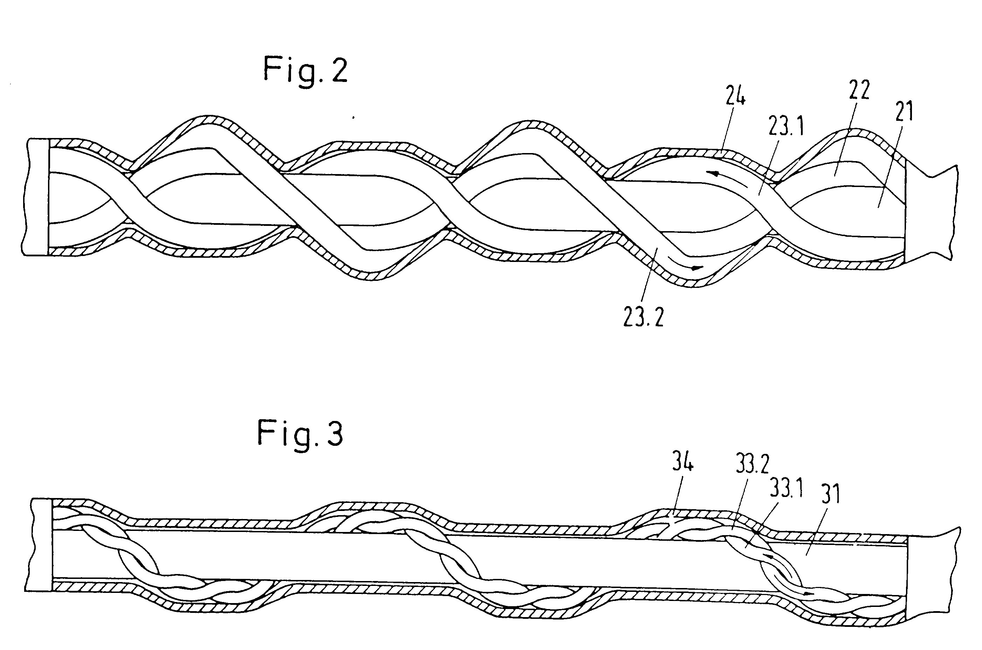

Der prinzipielle Aufbau eines erfindungsgemäßen Belastungssensors gemäß Fig. 1 weist eine Stützstruktur 1 mit glatter Oberfläche, eine darauf angeordnete, drahtförmige Störstruktur 2 sowie eine Lichtleitfaser 3 auf, welche durch die Störstruktur 2 in Abständen von der Stützstruktur 1 abgehoben wird derart, daß zwischen zwei derartiger Anhebungen zwei Bereiche I und II entstehen, in denen der Lichtleiter nicht abgestützt ist. Die Störstruktur kann auch als Oberflächenerhebung einer ansonsten ebenen Stützstruktur ausgebildet sein. In dem dargestellten Beispiel, beträgt der Durchmesser der drahtförmigen Struktur 2 etwa das zweifache des Durchmessers der Lichtleitfaser 3; der Abstand zweier benachbarter Anhebungen der Lichtleitfaser 3 von der Stützstruktur 1 entspricht etwa dem achtfachen Durchmesser der Lichtleitfaser 3. Die Lichtleitfaser wird dadurch bereits im Normalzustand des Belastungssensors bis nahe an ihre physikalisch vorgegebenen Biegeradiusgrenzen verformt. Eine zusätzliche, senkrecht zur Oberfläche der Stützstruktur 1 wirkende Belastung, beispielsweise in Form einer Druckbelastung D, welche durch die gestrichelten Pfeile symbolisiert ist, wird die Lichtleitfaser in den Bereichen I und II weiter verbogen, wobei diese Biegeradiusänderungen Intensitätsänderungen des in der Lichtleitfaser geführten Lichtes verursachen.

Temperaturbedingte Längenänderungen oder eine Zugbelastung der Stützstruktur 1 werden nur im geringen Maß auf die Lichtleitfaser 3 übertragen, so daß derartige Störungen die Empfindlichkeit des Belastungssensors oder das Meßsignal nur unwesentlich beeinflussen.

Bei dem in Fig. 2 dargestellten Ausführungsbeispiel eines seilförmigen Belastungssensors besteht die Stützstruktur aus einer Kunststoffseele 21, auf welche als Störstruktur ein Metalldraht oder eine Quarzfaser 22 in Windungen mit großer Steigung aufgewickelt ist. Auf diese seilförmige Stütz- und Störstruktur ist eine erste Lichtleitfaser 23.1 in einer zur Störstruktur 22 gegenläufigen Wicklung mit ebenfalls großer Steigung gewickelt. Um dieses, aus Stützstruktur 21, Störstruktur 22 und erstem Lichtleiter 23.1 gebildetes Seil ist mit gleichem Wicklungssinn wie die Lichtleitfaser 23.1 eine zweite Lichtleitfaser 23.2 gewickelt, in welcher das Licht in entgegengesetzter Richtung zur Lichtleitfaser 23.1 geführt ist. Die Lichtleitfaser 23.1 und 23. 2 sind an einem Ende des Seiles optisch miteinander verbunden oder als Schleife einer durchgehenden Lichtleitfaser ausgebildet, so daß die Lichteinspeisung und die Signalauswertung am gleichen Seilende erfolgen können.

Durch die gegensinnig Wicklung von Störstruktur und Lichtleitern werden letztere in periodischen Abständen, und zwar in jedem Kreuzungspunkt der Wicklungen von der Kunststoffseele 21, welche den Wicklungskern darstellt abgehoben. Die Steigung der Wicklungen bestimmt dabei den Abstand der Anhebungen. Je nach dem Verhältnis der Steigungen der einzelnen Wicklungen zueinander verteilen sich die Kreuzungspunkte entweder linien- oder schraubenförmig auf der, bzw. um die Kunststoffseele 21, so daß der gesamte Belastungssensor eine im wesentlichen radialsymmetrische Empfindlichkeit gegen äußere Drücke aufweist.

Der Schrumpfschlauch 24 führt zu einer Vorspannung der Lichtleitfaser in Richtung auf die Oberfläche des Kernes, die bereits eine Verringerung der von der Faser transmittierten Lichtleistung zur Folge hat. Jede zusätzliche radiale Belastung von außen führt sofort zu einer weiteren elastischen Verformung der Lichtleitfaser und damit zu einem reversiblen weiteren Abfall der transmittierten Lichtleistung, der als Meßsignal detektiert wird.

Der Windungsabstand der Störstruktur 2 beträgt mindestens das doppelte des Durchmessers der Lichtleitfaser 3 oder der Störstruktur 2, je nachdem, welcher von beiden größer ist. Die obere Grenze für den Windungsabstand ist relativ unkritisch, sollte jedoch das zehnfache der eben erwähnten Durchmesser nicht überschreiten. Ebenfalls unkritisch ist der Windungsabstand der Lichtleitfasem 23.1 bzw. 23.2; jedoch verbessert sich die radiale Druckempfindlichkeit mit kleiner werdendem Windungsabstand. Der Durchmesser der Kunststoffseele 21 ist ebenfalls unkritisch; günstige Werte liegen etwa beim zwei- bis zehnfachen des Lichtleiterdurchmessers. Weiterhin hat es sich als günstig herausgestellt, wenn die Störstruktur und die Lichtleitfaser etwa den gleichen Durchmesser haben.

Bei dem in Fig. 3 dargestellten Ausführungsbeispiel eines Belastungssensors sind zwei Lichtleitfasern 33.1 und 33.2 aus Quarzglas miteinander verdrillt und gemeinsam um eine Kunststoffseele 31 gewickelt. Bei dieser Anordnung übernehmen die Lichtleitfasern wechselseitig die Funktion der Störstruktur gemäß Fig. 2, so daß auf diese verzichtet werden kann. Die beiden Lichtleitfasern 33.1 und 33.2 sind an einem Ende des Belastungssensors optisch miteinander verbunden, was z.B. auch durch Schleifenbildung und Rückführung eines einzigen Lichtleiters bewirkt wird. Die Kunststoffseele 31 besteht aus einem flexiblen, jedoch harten Material und ist zusammen mit den Lichtleitern 33.1 und 33.2 von einem Schrumpfschlauch 34 umgeben.

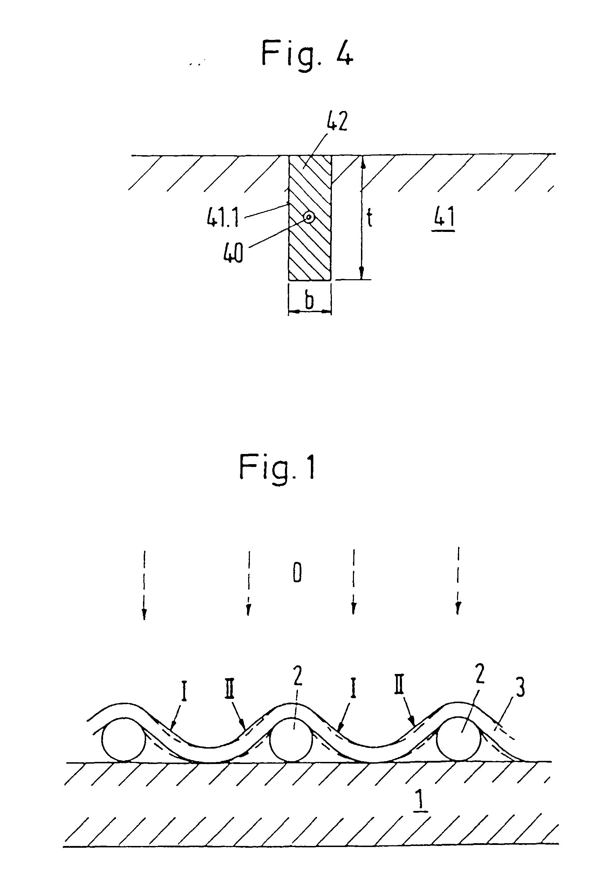

Zu der Detektion von Fahr- oder Flugzeugen ist ein erfindungsgemäßer Belastungssensor, beispielsweise gemäß Fig. 2 oder 3, an der gewünschten Position in die Fahrbahn eingelassen. Zur sicheren und störungsfreien Detektion eines überrollenden Rades hat sich eine in Fig. 4 dargestellte Einbettung eines faseroptischen Belastungssensors 40 in einen Schlitz 41.1 der Fahrbahndecke 41, mit einer diesen umgebenden, elastischen Vergußmasse 42 erwiesen. Die Tiefe t des Schlitzes 41.1 verhält sich dabei zu deren Breite b im Verhältnis 1 zu 3.

## Patentansprüche

1. Mit einer ein Lichteintritts- und ein Lichtaustrittsende aufweisenden Lichtleitfaseranordnung ausgestatteter seilförmiger faseroptischer Belastungssensor, bei dem die Belastung auf die Lichtleitfaseranordnung einwirkt und über vom Lichteintrittsende zum Lichtaustrittsende übertragenes Licht aufgrund von Biegeradiusänderungen der die Lichtleitfaseranordnung bildenden Lichtleitfasern (23.1, 23.2; 33.1, 33.2) erfaßt ist, die Lichtleitfaseranordnung zwei Lichtleitfasern aufweist, die gemeinsam um eine Kunststoffseele (21, 31) gleichsinnig gewickelt sind, das Lichteintritts- und das Lichtaustrittsende am selben Ende der Kunststoffseele angeordnet sind, die Biegeradiusänderungen durch eine auf der Kunststoffseele angeordnete Störstruktur hervorgerufen sind und die Lichtleitfasern und die Störstruktur von einer eine radiale Vorspannung erzeugenden Schutzhülle (24, 34) umgeben ist.

2. Belastungssensor nach Anspruch 1, dadurch gekennzeichnet, daß die Kunststoffseele (31) aus einem flexiblen, jedoch harten Material besteht und daß die Lichtleitfasern (33.1 und 33.2), zugleich die Störstruktur bildend, miteinander verdrillt und um die Kunststoffseele (31) gewickelt sind.

3. Belastungssensor nach einem der vorhergehenden Ansprüche, gekennzeichnet durch eine Einbettung in einen Schlitz (41.1) in einer Fahrbahndecke (41), dessen Breite (b) zu dessen Tiefe (t) im Verhältnis von 1 zu 3 steht und welcher mit einer elastischen Vergußmasse (42) gefüllt ist.

## Claims

1. A rope-shaped fiberoptic load sensor equipped with an optical fiber arrangement having a light entrance end and a light exit end, wherein the load acts on the optical fiber arrangement and is detected via light transmitted from the light entrance end to the light exit end by reason of bending radius changes in the optical fibers (23.1, 23.2; 33.1, 33.2) forming the optical fiber arrangement, the optical fiber arrangement has two optical fibers which are jointly wound in the same direction around a plastic core (21, 31), the light entrance end and light exit end are disposed at the same end of the plastic core, the bending radius changes are caused by an interference structure disposed on the plastic core, and the optical fibers and interference structure are surrounded by a protective sheath (24, 34) producing a radial initial stress.

2. A load sensor according to claim 1, characterized in that the plastic core (31) consists of a flexible but hard material, and the optical fibers (33.1 and 33.2), while forming the interference structure, are twisted together and wound around the plastic core (31).

3. A load sensor according to either of the above claims, characterized by being embedded in a road surface (41) in a slot (41.1) whose width (b) to depth (t) has a ratio of 1 to 3 and which is filled with an elastic sealing compound (42).

## Revendications

1. Capteur de charge à fibres optiques en forme de câble muni d'un dispositif à fibres optiques présentant une extrémité d'entrée de lumière et une extrémité de sortie de lumière, dans lequel la charge agit sur le dispositif à fibres optiques et est détectée par de la lumière transmise de l'extrémité d'entrée de lumière à l'extrémité de sortie de lumière suite à des modifications de rayon de courbure des fibres optiques (23.1, 23.2 ; 33.1, 33.2) formant le dispositif à fibres optiques, dans lequel le dispositif à fibres optiques présente deux fibres optiques, enroulées ensemble et de même sens autour d'une âme en matière plastique (21, 31), l'extrémité d'entrée de lumière et l'extrémité de sortie de lumière étant disposées à la même extrémité de l'âme en matière plastique, dans lequel les modifications de rayon de courbure sont mises en évidence par une structure de perturbation disposée sur l'âme en matière plastique, et dans lequel les fibres optiques et la structure de perturbation sont entourées d'une enveloppe de protection (24, 34) assurant une précontrainte radiale.

2. Capteur de charge selon la revendication 1, caractérisé en ce que l'âme en matière plastique (31) se compose d'un matériau flexible et cependant dur, et en ce que les fibres optiques (33.1 et 33.2), formant ensemble la structure de perturbation, sont torsadées ensemble et enroulées autour de l'âme en matière plastique (31).

3. Capteur de charge selon l'une des revendications précédentes, caractérisé par une insertion dans une rainure (41.1) située dans un revêtement de chaussée (41), dont la largeur (b) présente un rapport de 1 à 3 par rapport à la profondeur (t) et qui est remplie d'une masse de remplissage élastique (42).
